(19)

Europäisches Patentamt
European Patent Office
Office européen des brevets

(11) **EP 2 696 066 A2**

(12) **EUROPEAN PATENT APPLICATION**

(43) Date of publication:
**12.02.2014 Bulletin 2014/07**

(51) Int Cl.:
**F03D 3/06** (2006.01)

(21) Application number: **13179650.0**

(22) Date of filing: **07.08.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **10.08.2012 IT PD20120246**

(71) Applicant: **Wind Twentyone S.r.l.**
**35020 Albignasego (PD) (IT)**

(72) Inventors:
• **Raciti Castelli, Marco**
  **I-31100 Treviso (IT)**
• **Benini, Ernesto**
  **I-35038 Torreglia (PD) (IT)**
• **Bedon, Gabriele**
  **I-30034 Mira (VE) (IT)**

(74) Representative: **Gallo, Luca**
**Gallo & Partners S.r.l.**
**Via Rezzonico, 6**
**35131 Padova (IT)**

(54) **Rotor of vertical-axis wind turbine**

(57)     The present finding refers to a rotor of a vertical-axis wind turbine (10), comprising a shaft (11) from which spokes (12, 13) protrude radially to support blades (15, 16) having a substantially troposkein geometry; each blade (15, 16) has
- the maximum chord (A1), of the section orthogonal to the extension axis of the blade, at at least one of its upper (18) and lower (19) ends, and minimum chord (A2) at its central part (20), the chord (A) varying continuously between such maximum (A1) and minimum (A2) values,
- a ratio (C) between the thickness (B) and the chord (A) that is highest (C1) in its central part (20) and lowest (C2) at at least one of the upper (18) and lower (19) ends, said thickness/chord ratio (C) varying continuously between said maximum (C1) and minimum (C2) values.

Fig. 1

EP 2 696 066 A2

## Description

The present finding has as object a rotor of a vertical-axis wind turbine.

Up to now, in Europe, 20% of electrical energy demand is obtained from renewable resources, and more than a quarter of such 20% comes from energy produced by plants of wind type.

Such percentage is bound to increase in the near future, according to the directives of the European Union Commission on Renewable Energy, up to a production of electrical energy coming from renewable resources of 34% of the total energy produced, with 14% coming from wind source.

Wind turbines operating in wind plants are mainly of the type with horizontal axis, with a three-blade rotor.

Nevertheless, in recent years, there has been increased interest in vertical-axis wind turbines, above all for small plants, with the objective of decentralizing the production of electrical energy from large plants towards urban centers as well as small towns. Vertical-axis turbines have several advantages with respect to horizontal-axis turbines, including the independence of functioning with respect to the direction of origin of the wind, a lower acoustical emission, due to the low peripheral velocities of the blade sections, and also a more pleasant visual impact due to the substantially three-dimensional extension of their structure, as opposed to the two-dimensionality typical of horizontal-axis generators, normally constituted by a helix borne by a long pole. Among the vertical-axis wind turbines, the type "with lift" is often used; the most well-known model thereof is constituted by the Darrieus turbine.

Darrieus turbines generally comprise a vertical-axis shaft from which spokes protrude radially to support at least two blades extended upward along rectilinear or curved trajectories, also with vertical axis or tilted in tangential direction, i.e. extended along a helical line.

Included among the turbines of such type are also those whose blades are characterized by a so-called "troposkein" geometry, corresponding with the shape that a chord in rotation assumes when fixed at its ends to the rotation axis.

Various studies have been conducted on vertical-axis wind turbines having blades with troposkein form or the like; indeed, troposkein geometry is often reproduced in a simplified manner by means of similar configurations, such as a line comprising a circular-arc central part and two rectilinear parts, upper and lower with respect to the central part, or by means of other very similar curved sections.

Sheldahl et al., in the publication "Aerodynamic Performance of a 5-Metre-Diameter Darrieus Turbine With Extruded Aluminium NACA-0015 Blades", publication code SAND80-0179, have developed a vertical-axis turbine with shape similar to the troposkein, having five meters diameter and constituted by sections with blade aerodynamic profile of NACA 0015 type, by performing measurement tests of the relative performances in open field.

Sheldahl, in the document "Comparison of Field and Wind Tunnel Darrieus Wind Turbine Data", publication code SAND80-2469, describes the development of a vertical-axis turbine with shape similar to the troposkein, having two meters diameter and constituted by blade sections of NACA 0012 type, by performing aerodynamic tests both in wind tunnel and in open field.

Ashwill and Leonard in the document "Developments in Blade Shape Design for a Darrieus Vertical Axis Wind Turbine", publication code SAND86-1085, propose a numerical code for supporting the designers of wind turbines in the development of troposkein geometries or the like; even small geometric deviations on the blades due to the gravitation force are considered, coming to define turbines having troposkein blade with the blade characteristics variable in a discrete manner.

Ashwill in the document "Measured Data for the Sandia 34-Meter Vertical Axis Wind Turbine", publication code SAND91-2228, documents the measurements in open field of a vertical-axis turbine with shape similar to the troposkein, having 17.1 meters range, constituted by blade sections at the ends of NACA 0021 type and in the central portion of SANDIA 0018/50 type, whose chord is narrowed in the central part of the blade.

Patents pertaining to vertical-axis wind turbines having blades with troposkein form or the like can also be found in the technical literature: the patent US 5,405,246 on behalf of Goldberg describes a rotor having blades with helical extension and with approximately troposkein form, with blade sections having variable chord, maximum at the tips of the blade at greater distance from the rotation axis, and with an approximately constant blade thickness/chord ratio.

All the above-described configurations of a turbine having rotor having blades with troposkein or like form have the common particular characteristic of having only one type of aerodynamic section profile, or employing a discrete number of aerodynamic profile types along the entire blade extension.

Since the distance of the blade sections from the rotation axis continuously varies along the blade extension, the use of a discrete number of aerodynamic profiles involves a non-optimized aerodynamic performance of the rotor, which could instead be increased by employing a continuous variation of the aerodynamic profile type as a function of the distance of each blade section from the rotation axis. In such sense, the patent document GB 2404227 on behalf of Cochrane describes a rotor having blades with helical extension and an approximately troposkein form with variable chord, such chord being reduced at the blade ends. The thickness/chord ratio is increasing in proximity to the blade attachments.

In such case, even if the aerodynamic profiles are preferably continuously variable along the blade extension, a law of variation is not determined such to maximize the efficiency of the turbine.

The task of the present finding is to obtain a rotor of a vertical-axis wind turbine that is capable of overcoming the abovementioned drawbacks of the prior art.

In the scope of such task, one object of the finding is to provide a turbine rotor which ensures an improved efficiency of the turbine with respect to the abovementioned analogous turbines of the prior art.

Not least object of the finding is to provide a rotor of a vertical-axis wind turbine which can be obtained with known plants and technologies.

This task, as well as these objects and others which will be clearer hereinbelow, are attained by a rotor of a vertical-axis wind turbine, comprising a shaft having a vertical axis from which spokes protrude radially to support at least two blades with troposkein geometry or the like, **characterized in that** each blade has

- the maximum chord, of the section orthogonal to the extension axis of the blade, at at least one of its upper and lower ends, and minimum chord at its central part, the chord continuously varying between such maximum and minimum values,
- a ratio between the thickness and the chord that is highest in its central part and lowest at at least one of the upper and lower ends, said thickness/chord ratio varying continuously between said maximum and minimum values.

Further characteristics and advantages of the finding will be clearer from the description of a preferred but not exclusive embodiment of the rotor of a wind turbine according to the finding, illustrated as a non-limiting example in the set of drawings, in which:

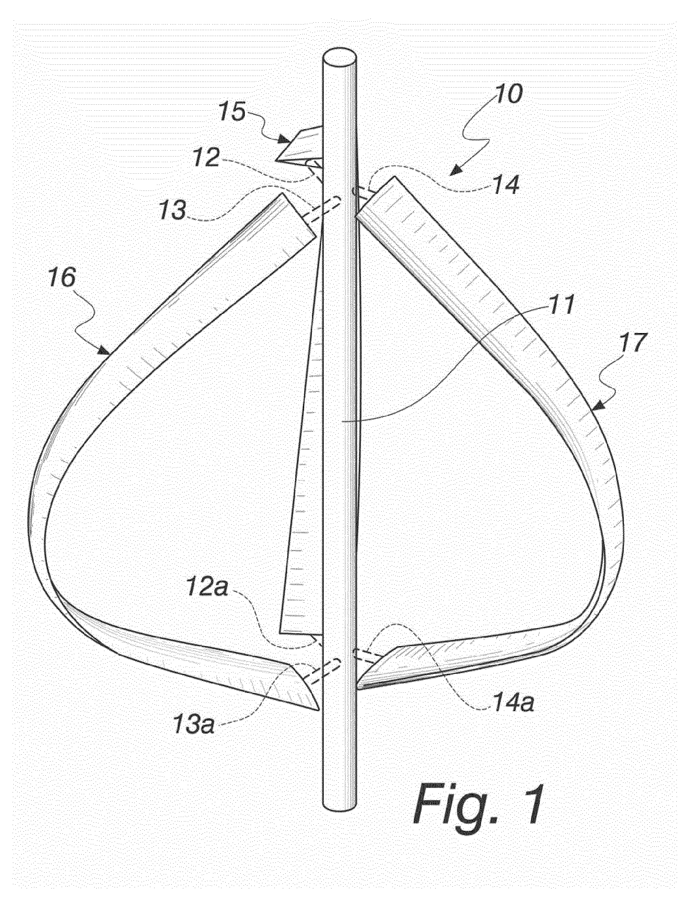

- figure 1 illustrates, in a simplified manner, a rotor according to the finding;
- figure 2 represents a front view of a blade of a rotor according to the finding;
- figure 3 represents a side view of a blade of a rotor according to the finding;
- figure 4 represents the section indicated by the line IV-IV in figure 3;
- figure 5 represents the section indicated by the line V-V in figure 3;
- figure 6 represents the section indicated by the line VI-VI in figure 3;
- figure 7 represents the section indicated by the line VII-VII in figure 3;
- figure 8 represents the progression of the length of the chord in relation to the position of the blade section with respect to the base of the rotor;
- figure 9 represents the progression of the ratio between blade section thickness and the chord of the same section in turn in relation to the position of the blade section with respect to the base of the rotor;
- figure 10 represents a graph comparing the efficiency of a turbine of known type with that of a turbine equipped with a rotor according to the finding.

With reference to the abovementioned figures, a rotor of a vertical-axis wind turbine according to the finding is indicated in its entirety with the reference number 10.

Such rotor 10 comprises a shaft 11 having a vertical axis from which spokes radially protrude, three equidistant spokes in the embodiment described herein, 12, 13 and 14 above and 12a, 13a and 14a below, for supporting the same number of blades 15, 16 and 17 having a substantially troposkein geometry or a geometry similar thereto.

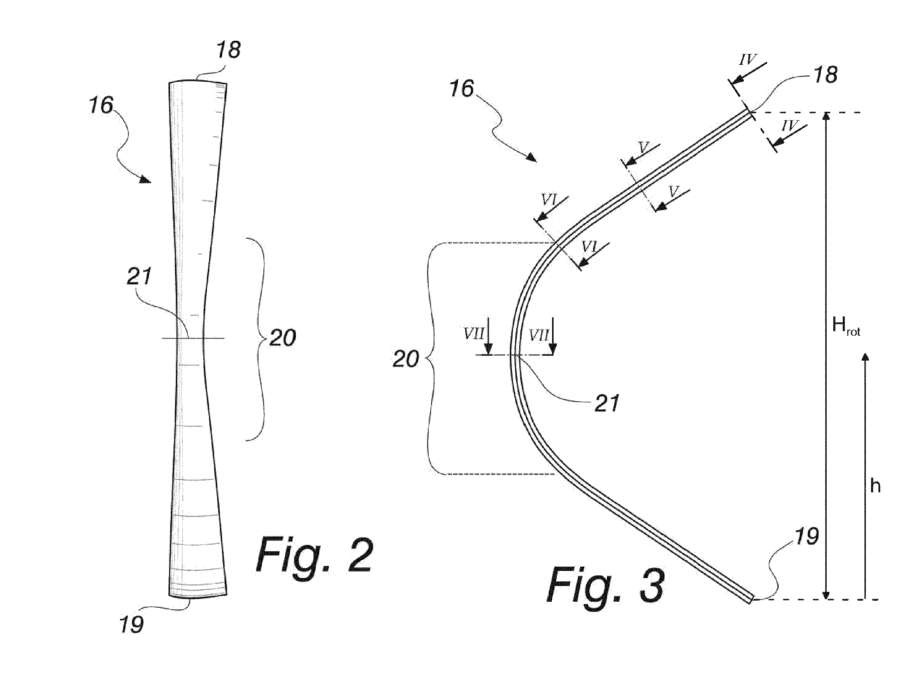

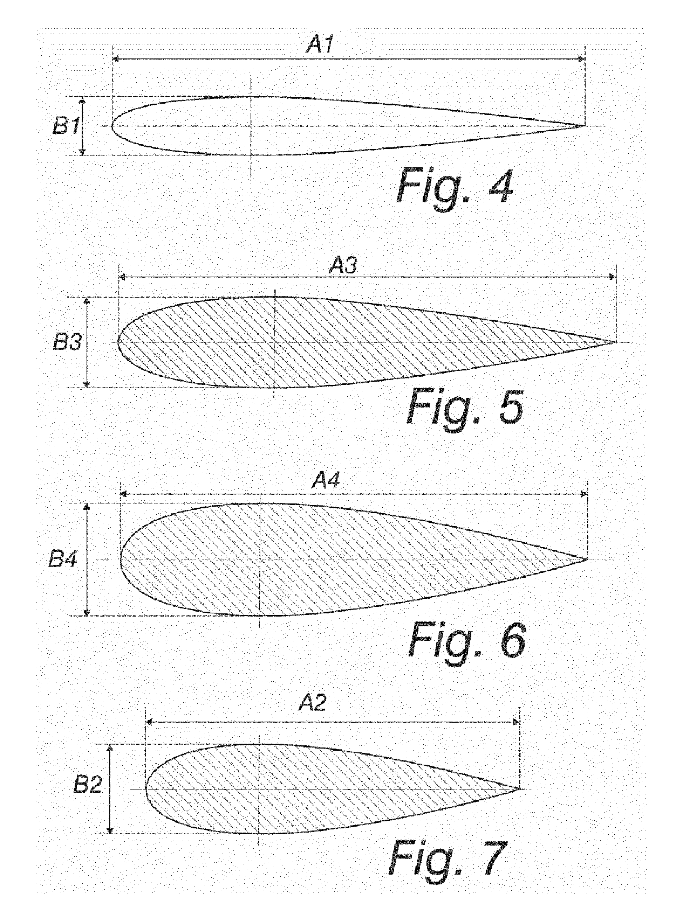

The particular characteristic of the finding consists of the fact that each blade, for example blade 16 in figures 2, 3 and following, has, as in figure 4, the maximum chord A1, of the section orthogonal to the extension axis of the blade, at its upper 18 and lower 19 ends, and minimum chord A2, as in figure 7, at its central part 20, and in particular at the median section 21.

The chord A continuously varies between such maximum A1 and minimum A2 values, as is quite visible from the lines of the front view of figure 2 of the blade 16.

By way of example, figure 5 represents a third blade section, in which the chord A3 has a lower value than the maximum chord A1 and higher value than the minimum chord A2; similarly, figure 6 shows a fourth blade section in which the chord A4 has value comprised between the chord A3 and the minimum chord A2.

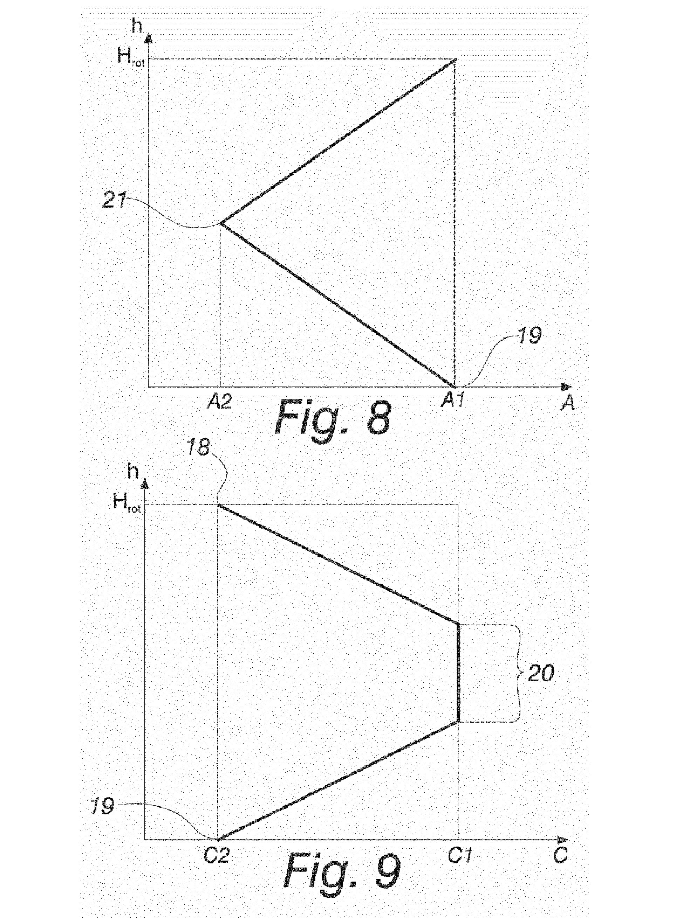

The blade geometry of the rotor 10, object of the finding, has an evolution of the chord, maximum at the blade ends 18 and 19 and minimum at the median section 21, according to a qualitative progression schematized in figure 8.

In the present embodiment of the finding, each blade 15, 16, 17 is symmetric with respect to the median section 21.

Such geometric solution is of course to be intended as exemplifying and not limiting of the finding.

In the graph of figure 8:

- Hrot represents the total height of the rotor;
- h represents the height of the generic blade section with respect to the base of the rotor;
- A represents the chord of the generic blade section;
- A2 represents the value of the minimum blade chord, at the median section 21 of the rotor;
- A1 represents the value of the maximum blade chord, at the upper 18 and lower 19 ends of the rotor 10.

The progression of the chord A as a function of the height h of the generic blade section with respect to the base of the rotor is rectilinear between the median section 21 and the ends 18 and 19.

Such geometric solution is of course to be intended as exemplifying and not limiting of the finding.

The particular characteristic of the finding also consists of the fact that each blade, for example blade 16 in figures 2, 3 and following, has a ratio C between the thickness B and the chord A that is highest, C1, in its central part 20 and lowest, C2, at the upper 18 and lower 19 ends.

The thickness/chord ratio C continuously varies between the maximum C1 and minimum C2 values.

Coinciding with the above-described progression of the chord, the thickness/chord ratio C (B/A) of the blade section has a qualitative rectilinear progression represented in figure 9, a geometric solution that is of course exemplifying and not limiting of the finding.

The ratio C between the thickness and the chord B/A of the generic blade section has a rectilinear progression between the median section 21 and the blade ends 18, 19.

In particular, the value of C is maximum not only in the median section 21 but is thus in the entire central part 20, where with 'central part' it is intended for example a blade portion around the median section 21 being extended between a maximum corresponding with 50% of the rotor height Hrot, and a minimum substantially corresponding with an area surrounding the median section.

The present finding therefore regards a rotor 10 equipped with blades having particular configuration with substantially troposkein form, i.e. an actually troposkein form or a form that is similar thereto, having optimized distribution of chord and thickness of the blade sections, such to maximize the aerodynamic performance of the blade itself.

The described geometry can be applied to rotors constituted by two or more blades.

In particular, the finding ensures the maximum efficiency of the turbine comprising the rotor 10, when the value of the chord/(maximum chord) ratio, i.e. A/A1, as a function of the height h is defined by the following formulas:

$$\text{for } h/Hrot < 0.5$$

$$h/Hrot = -0.849 * (A/A1) + 0.850$$

$$\text{for } h/Hrot > 0.5$$

$$h/Hrot = 0.849 * (A/A1) + 0.150$$

Variations of the (maximum chord)/chord ratio, i.e. A/A1, of less than ±10% with respect to the values determined by the proposed formulas do not negatively affect the performances of the rotor and are to be considered comprised within the present invention. In addition, the coinciding evolution of the thickness/chord ratio B/A of the blade section as a function of the height h is advantageously governed by the following formulas:

$$\text{for } h/Hrot < 0.33$$

$$h/Hrot = 2.727 * (B/A) - 0.330$$

$$\text{for } 0.33 < h/Hrot < 0.67$$

$$h/Hrot = 0.24$$

$$\text{for } h/Hrot > 0.67$$

$$h/Hrot = 2.727 * (B/A) + 1.330$$

Also in this case, variations of the thickness/chord ratio (B/A) of less than ±10% with respect to the values determined by the proposed formulas do not negatively affect the performances of the rotor and are to be considered comprised within the present invention.

Figures 3 to 7 illustrate an embodiment of the above-described progression of the blade sections as a function of the height h of the generic blade section with respect to the base of the rotor 10, not illustrated for the sake of simplicity.

Figure 3 shows the positions of the blade sections represented in the subsequent figures 4 to 7 as a function of the height of the generic blade section with respect to the base of the rotor:

    Section IV-IV: h/Hrot=1;
    Section V-V: h/Hrot=0.833;
    Section VI-VI: h/Hrot=0.667;
    Section VII-VII: h/Hrot=0.500.

Figure 4 shows the blade section IV-IV orthogonal to the axis of the blade itself, having geometric ratios A1/A1=1.000 and B1/A1=0.121.

Figure 5 shows the blade section V-V, orthogonal to the axis of the blade itself, having geometric ratios A3/A1=0.804 and B3/A3=0.182).

Figure 6 shows the blade section VI-VI orthogonal to the axis of the blade itself, having geometric ratios A4/A1 =0.609 and A4/B4=0.2400.

Figure 7 shows the blade section VII-VII orthogonal to the axis of the blade itself, having geometric ratios A2/A1=0.412 and B2/A2=0.2400.

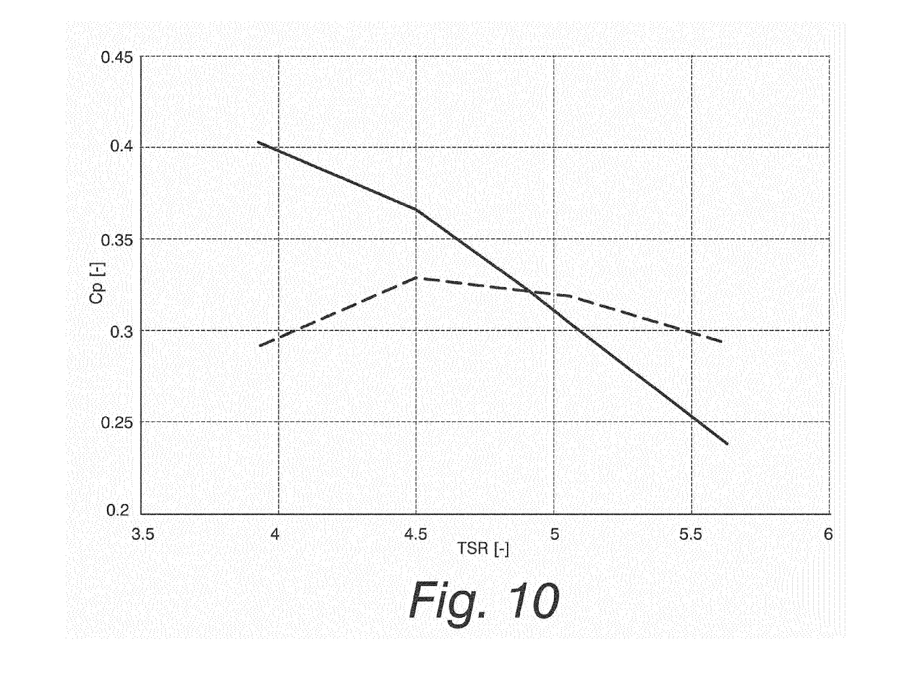

By way of example, figure 10 illustrates the outcome of a numeric simulation, based on the BE-M (Blade Element - Momentum) method described in the document by Raciti Castelli, Fedrigo and Benini "Effect of Dynamic Stall, Finite Aspect Ratio and Streamtube Expansion on VAWT Performance Prediction using the BE-M Model" which was published in the "International Journal of Mechanical and Aerospace Engineering" number 6 of 2012.

In such figure 10, the aerodynamic performances of the rotor designed by Sheldahl in the abovementioned document "Comparison of Field and Wind Tunnel Darrieus Wind Turbine Data", document code SAND80-2469, are compared with those of a rotor 10 according to the present finding with equal swept area.

In particular, the figure reports the progression of the power coefficient, defined by:

$$Cp = P / (\tfrac{1}{2}\, \rho\, A\, V^3)$$

given that:

P is the mechanical power at the axis of the rotor;
$\rho$ is the density of the air;
A is the swept area of the rotor;
V is the undisturbed velocity of the wind upstream of the rotor,

as a function of the peripheral velocity ratio, defined by:

$$TSR = \omega Rmax/V$$

given that:

$\omega$ is the angular velocity of the rotor;
Rmax is the maximum radius of the rotor (at the center line of the rotor itself);
V is the undisturbed velocity of the wind upstream of the rotor.

The functioning curve of the rotor analyzed by Sheldahl is indicated with a dashed line, whereas the curve of a rotor 10 with equal swept area having the characteristics of the present invention is indicated with a solid line.

The greater mechanical power at the axis of the rotor obtained by means of the present invention is clearly visible.

It has been established in practice that the finding achieves the set task and objects.

In particular, with the finding, a rotor of a vertical-axis wind turbine has been developed which ensures an improved efficiency of the turbine with respect to the abovementioned analogous turbines of the prior art.

Such rotor of a vertical-axis wind turbine can of course be obtained with known plants and technologies.

The finding thus conceived is susceptible to numerous modifications and variations, all falling within the scope of the inventive concept; in addition, all details can be substituted with other technically equivalent elements.

In practice, the materials used, as long as they are compatible with the specific use, can be of any type according to the needs and the state of the art.

Where the characteristics and techniques mentioned in any claim are followed by reference marks, such marks were added for the mere purpose of increasing the comprehensibility of the claims, and consequently such reference marks do not have any limiting effect on the interpretation of each element identified by way of example by such reference marks.

## Claims

1. Rotor of a vertical-axis wind turbine (10), comprising a shaft (11) having a vertical axis from which spokes (12, 13) protrude radially to support at least two blades (15, 16) having a substantially troposkein geometry, **characterized in that** each blade (15, 16) has

   - the maximum chord (A1), of the section orthogonal to the extension axis of the blade, at at least one of its upper (18) and lower (19) ends, and minimum chord (A2) at its central part (20), the chord (A) varying continuously between such maximum (A1) and minimum (A2) values,
   - a ratio (C) between the thickness (B) and the chord (A) that is highest (C1) in its central part (20) and lowest (C2) at at least one of the upper (18) and lower (19) ends, said thickness/chord ratio (C) varying continuously between said maximum (C1) and minimum (C2) values.

2. Rotor according to claim 1, **characterized in that** the progression of the chord (A) as a function of the height (h) of the generic blade section with respect to the base of the rotor, is rectilinear between the median section (21) and the ends (18, 19).

3. Rotor, according to the preceding claims, **characterized in that** the blade ends (18, 19) both have maximum chord (A1).

4. Rotor, according to the preceding claims, **characterized in that** each blade (15, 16) is symmetric with respect to the median section (21).

5. Rotor, according to the preceding claims, which is **characterized in that** the ratio (C) between the thickness and the chord (B/A) of the generic blade section has a rectilinear progression between the median section (21) and the blade ends (18, 19).

6. Rotor according to the preceding claims, which is **characterized in that** the value of the ratio (C) is maximum (C1) constantly in the entire central part (20), where with 'central part' it is intended a blade portion around the median section (21) being extended between a maximum, corresponding with 50% of the rotor height (Hrot), and a minimum substantially corresponding with an area surrounding the median section (21).

7. Rotor according to the preceding claims, which is **characterized in that** the value of the chord/(maximum chord) ratio (A/A1), as a function of the height (h) of a blade section is defined by the following formulas:

$$\text{for } h/Hrot < 0.5$$

$$h/Hrot = -0.849*(A/A1) + 0.850$$

$$\text{for } h/Hrot > 0.5$$

$$h/Hrot = 0.849*(A/A1) + 0.150$$

with variations of the chord/(maximum chord) ratio, (A/A1), which are acceptable if lower than $\pm10\%$ with respect to the values determined by the proposed formulas.

8. Rotor according to the preceding claims, which is **characterized in that** the thickness/chord ratio (B/A) of the blade section as a function of the height (h) is governed by the following formulas:

$$\text{for } h/Hrot < 0.33$$

$$h/Hrot = 2.727*(B/A) - 0.330$$

$$\text{for } 0.33 < h/Hrot < 0.67$$

$$h/Hrot = 0.24$$

$$\text{for } h/Hrot > 0.67$$

$$h/Hrot = -2.727*(B/A) + 1.330$$

with variations of the thickness/chord ratio (B/A) which are acceptable if lower than $\pm10\%$ with respect to the values determined by the proposed formulas.

Fig. 1

Fig. 3

Fig. 2

A1

B1

Fig. 4

A3

B3

Fig. 5

A4

B4

Fig. 6

A2

B2

Fig. 7

Fig. 8

Fig. 9

Fig. 10

**EP 2 696 066 A2**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5405246 A
- GB 2404227 A